# EUROPEAN PATENT APPLICATION

(11) **EP 2 030 511 A1**
(43) Date of publication of application: **04.03.2009**
(21) Application number: 08252651.8
(22) Date of filing: 08.08.2008
(51) Int. Cl.: A23L 1/06, A23L 1/212, A23B 7/005, A23L 3/02, A23L 3/10

(54) **Jam and its method of production**

(30) Priority: 11.08.2007 GB 0715713
(71) Applicant: Chivers Hartley Limited, 28 The Green Kings Norton Birmingham, B38 2SD (GB)
(72) Inventor: Waddup, Jason, Histon Cambridge, CB4 9NR (GB)
(74) Representative: Wood, Graham

(57) **Abstract**

The present invention provides a jam product and a method of producing the same in which fruit particulates are combined with a fruit puree in a container to form the jam product and this is performed in a manner which allows the fruit particulates to be maintained in substantially their original condition. The provision of the preserved fruit particulates and the fruit puree, allows an improved jam product to be provided to the consumer.

## Description

The invention to which this application relates is in relation to the production of foodstuffs commonly known as jams. There are typically two forms of jam; a standard jam, which comprises total soluble solids of 60% and above and reduced sugar jams which have total soluble solids in the region of 25%-50%. The standard jams are usually evaporative products while reduced sugar jams, are predominantly non-evaporative products.

Jams are typically manufactured in batches and the ingredients required to form the jam, are usually mixed together and comprise fruit, sugars and a thickener which is typically a combination of pectins to aid fruit distribution and to create a set texture. For reduced sugar products, a preservative such as Potassium Sorbate is also added. With these ingredients mixed together, the mixture is evaporated until the appropriate total soluble solids setting is achieved. The jam is then hot filled into appropriate containers. The product is typically agitated whilst cooking and whilst waiting to be filled into the appropriate containers. The agitation can cause the fruit to become broken down in appearance and the cooking process results in some flavour loss as a result of volatile loss of the batch waiting to be filled. The loss of flavour and breakdown of the fruit, are regarded by consumers as being unfavourable.

An aim of the present invention is to provide a method of manufacture and filling of the jam product in a manner which allows an improved form of jam to be achieved and provided to the consumer.

In a first aspect of the invention, there is provided a jam product comprising fruit particulates and fruit puree.

Typically the jam product is provided in a container and the container, with the fruit particulates and fruit puree held therein, is sealed and treated, typically by being pasteurised.

In one embodiment the pasteurisation is achieved using retort apparatus.

Typically, the fruit particulates are whole fruit or whole fruit particulates.

Typically, the fruit puree is created from mechanically broken down fruit mixed with granulated sugar and a thermo-reversible pectin.

In one embodiment, the thermo reversible pectin is activated by calcium chloride.

In a further aspect of the invention, there is provided a method of manufacturing a jam product, said method comprising the steps of providing a container, placing into said container a quantity of fruit particulates, placing into said container a portion of fruit puree, sealing the container and treating the container and the jam product held therein.

Typically the container and jam product are treated by pasteurisation.

In one embodiment the container which is used is subsequently used as a retail pack from which a consumer can remove the jam as and when required for consumption.

Typically, the fruit particulates are pre-processed to remove any outer skin, seeds or the like and may be in a canned manner, or frozen.

Typically, the fruit puree is created separately from the fruit particulates and therefore does not come into contact with the particulates until the same enters the container. Typically the fruit particulates and fruit puree are placed into the container in ambient conditions.

Typically, the fruit particulates and fruit puree are substantially of the same type of fruit.

The present invention therefore provides a final product and a method of producing the same in which the fruit particles are maintained in substantially their original condition and, with the addition of the fruit puree, an improved jam product is provided to the consumer.

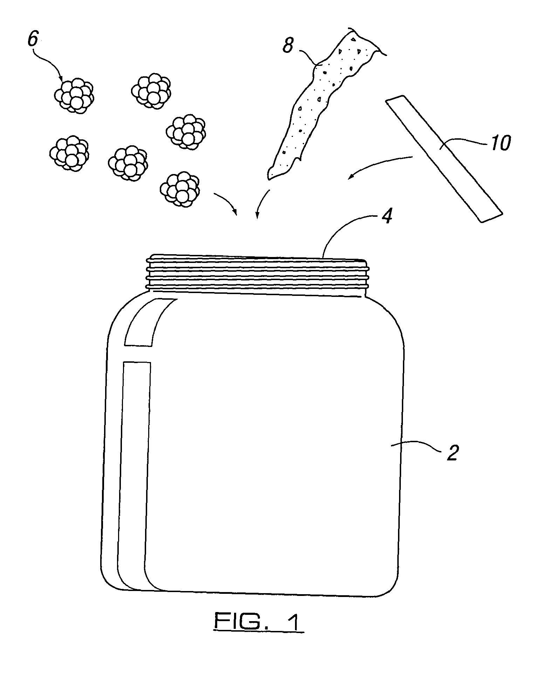

A specific embodiment of the invention is now described with reference to the accompanying drawings, wherein:-
Figure 1 illustrates in a schematic manner the method used in accordance with the invention.

The present invention provides an effective manner of producing a jam foodstuff without experiencing the degree of loss of flavour and/or appearance which is caused using conventional jam making procedures.

Furthermore the jam can be provided in a container of the type in which the jam is conventionally provided and therefore the consumer receives an improved jam product with no detrimental effect in terms of subsequent handling of the jam.

In one embodiment once the portion of fruit puree and the quantity of fruit particulates have been placed in the container, the jam product and/or container are manipulated to mix the fruit particulates and fruit puree.

An embodiment of the invention is described with regard to Figure 1, wherein there is shown a container 2 in which the jam product is to be held for retail purposes and which can subsequently be accessed by the consumer to consume the jam therein. At the time of manufacture, the container has an opening 4 through which the foodstuff is placed into the container. In accordance with the invention, the first foodstuff is a supply of fruit particulates 6 which, for example, in the form of raspberries may be provided as whole fruit pieces. The particulates can be pre-processed and then held in storage either frozen or canned prior to being placed into the container.

The appropriate quantity of the fruit is placed 6 into the container and then a fruit puree 8 is placed into the container 2 to flow over and around the fruit particulate 6 held in the container. The fruit puree is, in one embodiment, formed from mechanically broken down fruit pieces which are mixed with granulated sugar and a thermo-reversible pectin which is activated by calcium chloride. Some heat, but preferably minimal heat, is applied to melt the granulated sugar in the puree and the puree is then deposited at around 30°C. The fruit particulates and fruit puree, in combination, form the jam in the container. The opening 4 of the container is then sealed typically by a lid 10, and the container, with the foodstuff therein, is pasteurised, typically in a retort. Once pasteurised, the container and foodstuff therein can then be passed for retail purposes.

In practise, it is found that as the puree and particulates 6 are placed directly into the container, that the opportunity for loss of flavour or loss of appearance of the product is greatly reduced and therefore an improved product is obtained and a non-evaporative jam foodstuff is created.

## Claims

1. A jam product comprising fruit particulates and fruit puree.

2. A jam according to claim 1 wherein the fruit particulates are whole fruit or parts of whole fruits.

3. A jam according to claim 1 wherein the fruit puree is created from mechanically broken down fruit mixed with a sugar and a thermo-reversible pectin.

4. A jam according to claim 3 wherein the sugar is granulated sugar.

5. A jam according to claim 3 wherein the thermo reversible pectin is activated by calcium chloride.

6. A jam product according to claim 1 wherein the jam is held in a container to form a retail pack from which, when opened, a consumer can remove the jam as and when required for consumption.

7. A jam product according to claim 1 wherein the fruit particulates and fruit puree are substantially of the same type of fruit.

8. A method of manufacturing a jam product, said method comprising the steps of providing a container, placing into said container a quantity of fruit particulates, placing into said container a portion of fruit puree, sealing the container and treating the container and the jam product held therein.

9. A method according to claim 8 wherein the container and jam product are treated by being pasteurised.

10. A method according to claim 9 wherein the pasteurisation is achieved by using retort apparatus.

11. A method according to claim 8 wherein the fruit particulates are pre-processed to remove any outer skin, seeds or the like.

12. A method according to claim 11 wherein following the pre processing the fruit particulates are canned or frozen prior to use in the jam product.

13. A method according to claim 8 wherein the fruit puree is created separately from the fruit particulates.

14. A method according to claim 8 wherein the fruit puree and fruit particulates do not come into contact with each other until the same enter the container.

15. A method according to claim 8 wherein the fruit particulates and fruit puree are placed into the container in ambient conditions.

16. A method according to claim 8 wherein once the portion of fruit puree and the quantity of fruit particulates have been placed in the container, the jam product and/or container are manipulated to mix the fruit particulates and fruit puree.
